# EUROPÄISCHE PATENTSCHRIFT

(11) **EP 1 141 593 B1**
(45) Veröffentlichungstag und Bekanntmachung des Hinweises auf die Patenterteilung: **20.08.2003**
(21) Anmeldenummer: 99962077.6
(22) Anmeldetag: 23.11.1999
(51) Int. Cl.: F16J 9/22

(54) **KOLBENRING FÜR EINEN KOLBEN FÜR VERBRENNUNGSMOTOREN**
PISTON RING FOR THE PISTON OF AN INTERNAL COMBUSTION ENGINE
SEGMENT DE PISTON POUR PISTON DE MOTEUR A COMBUSTION INTERNE

(30) Priorität: 14.12.1998 DE 19857637
(43) Veröffentlichungstag der Anmeldung: 10.10.2001
(73) Patentinhaber: MAHLE GMBH, D-70376 Stuttgart (DE)
(72) Erfinder: ISSLER, Wolfgang, D-71409 Schwaikheim (DE)
(86) Internationale Anmeldenummer: DE9903755
(87) Internationale Veröffentlichungsnummer: WO00036320

(56) Entgegenhaltungen:
- WO-A-97/11295
- US-A- 4 359 229
- US-A- 4 835 856
- US-A- 5 241 748
- PATENT ABSTRACTS OF JAPAN vol. 018, no. 183 (M-1584), 29. März 1994 (1994-03-29) & JP 05 340473 A (NIPPON STEEL CORP), 21. Dezember 1993 (1993-12-21)

## Beschreibung

Die Erfindung betrifft einen Kolbenring, insbesondere Verdichtungsring für einen Kolben für Verbrennngsmotoren mit den Merkmalen nach dem Oberbegriff des Anspruchs 1.

Ein Kolbenring ist beispielsweise bekannt aus der WO 97/11295 A1, bei dem zur Verringerung des Differenzdruckes am Verdichtungsring in der Kolbenringunterflanke radial verlaufende, über den Umfang verteilte Kanäle vorgesehen sind, die eine Höhe von unter 1 mm, vorzugsweise 0,35 - 0,55 mm aufweisen. Über die Herstellungsart dieser an und für sich verhältnismäßig tiefen Kanäle ist nichts ausgesagt.

Außerdem ist aus der DE 42 05 503 A1 ein Kolben für Verbrennungsmotoren bekannt, bei dem zur Vermeidung von Nutenflankenbeschädigungen in der Ringnutflanke einer Ringnut für einen Verdichtungsring eine umfangsmäßig umlaufende Profilierung bestimmter Ausführung vorgesehen ist.

Nachteilig an dieser Ausführung ist, daß die Herstellung dieser schallplattenartigen Profilierung in der Ringnutflanke schwierig ist und einen großen Aufwand erfordert.

Weiterhin ist aus der US-A- 4 359 229 ein Kolbenring gemäß dem Oberbegriff des Anspruchs 1 bekannt, dessen Ringflanke mit über den Umfang verteilten Kanälen versehen ist, wobei diese Kanäle mittels Laser-Verfahren in die Kolbenringflanke eingebracht sind. Über die weitere Ausgestaltung der Kanäle kann der US-A- 4 359 229 nichts entnommen werden.

Ausgehend von einem derartigen Stand der Technik und dem Problem Material-Aufplattierungen an der Kolbenringflanke, insbesondere des obersten Verdichtungsringes, zu vermeiden, soll ein Mittel gefunden werden, das auf einfache und kostengünstige Weise zu einem entsprechenden Kolbenring führt.

Gelöst wird dieses Problem mit einem Kolbenring mit den Merkmalen nach dem Kennzeichen des Anspruchs 1.

Weitere vorteilhafte Ausgestaltungen der Erfindung sind in den Unteransprüchen enthalten.

Die Erfindung ist nachstehend anhand eines in der Zeichnung dargestellten Ausführungsbeispiels näher erläutert.
Es zeigt
- Fig. 1: einen erfindungsgemäßen Kolbenring in Seitenansicht im Schnitt und
- Fig. 2: einen Ausschnitt des Kolbenringes in Seitenansicht.

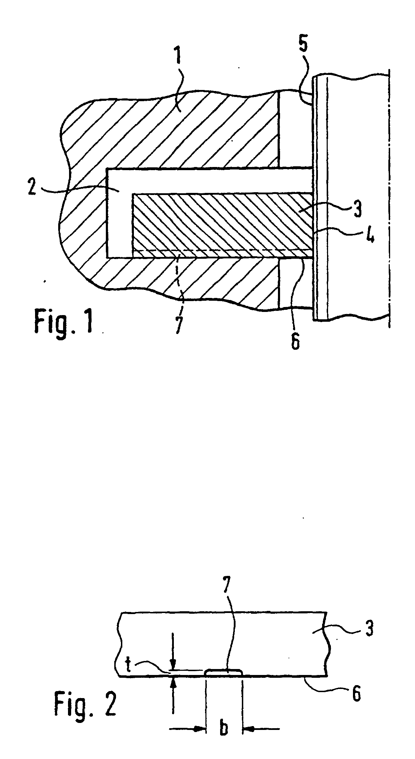

In einem Kolben 1 für z.B. einen Ottomotor aus einer Leichtmetall-Legierung ist in einer Ringnut 2 ein Kolbenring 3 (Verdichtungsring) gelagert, der mit seiner Lauffläche 4 an der Zylinderwand 5 anliegt. In die Kolbenringunterflanke 6 sind auf dem Umfang gleichmäßig verteilte ungefähr radial verlaufende Kanäle 7 eingebracht. Diese Kanäle 7 weisen beispielsweise eine typische Tiefe t von 1 - 5 µm (in der Zeichnung stark überhöht gezeichnet) und eine Breite b von 2 mm auf. Die Kanäle 7 werden auf einfache und kostengünstige Weise mit einem an sich bekannten Laser-Verfahren in den Kolbenring 3 eingearbeitet. Dabei eventuell entstehende örtliche Aufwürfe neben den Kanälen sind nicht nachteilig.

Es hat sich gezeigt, daß mit diesen Merkmalen auf einfache Weise ein Mittel gefunden wurde, das Nutflankenbeschädigungen oder Aufplattierungen auf den Kolbenring vermeidet.

## Patentansprüche

1. Kolbenring, insbesondere Verdichtungsring für einen Kolben für Verbrennungsmotoren, mit über den Umfang verteilten Kanälen auf der Kolbenringflanke, wobei die Kanäle (7) mittels Laser-Verfahren in die Kolbenringflanke (6) eingebracht sind,
**dadurch gekennzeichnet,**
**daß** die Kanäle (7) eine Tiefe t von 0,5 - 15 µm und eine Breite b von 0,05 - 5 mm aufweisen.

2. Kolbenring nach Anspruch 1,
**dadurch gekennzeichnet,**
**daß** 10 - 100 mit regelmäßigem Abstand angeordnete, vorzugsweise radial verlaufende Kanäle (7) in die Kolbenringflanke (6) eingebracht sind.

3. Kolbenring nach einem der vorhergehenden Ansprüche,
**dadurch gekennzeichnet,**
**daß** mindestens die mit den Kanälen (7) versehene Kolbenringflanke (6) mit einer zusätzlichen Oberflächenbeschichtung, vorzugsweise auf Zinn- oder Schwefel-Basis, versehen ist.

4. Kolben (1) mit einem Kolbenring (3) nach einem der vorhergehenden Ansprüche,
**dadurch gekennzeichnet,**
**daß** dieser in einer zumindest ersten Ringnut (2) des Kolbens (1) gelagert ist, welche Ringnut (2) eine Nuthöhe von 0,8 - 1,8 mm, eine Feuersteghöhe von 2 - 10 mm, eine Ringsteghöhe von 2,5 - 7 mm sowie eine Flankenrauheit von Ra < 0,3 µm aufweist.

## Claims

1. Piston ring, in particular compression ring for a piston for internal-combustion engines, with channels distributed over the periphery on the piston ring flank, the channels (7) being introduced into the piston ring flank (6) by a laser method, **characterised in that** the channels (7) have a depth t of 0.5 to 15 µm and a width b of 0.5 to 5 mm.

2. Piston ring according to claim 1, **characterised in that** 10 to 100 preferably radially extending channels (7) arranged with regular spacing are introduced into the piston ring flank **(6)**.

3. Piston ring according to either of the preceding claims, **characterised in that** at least the piston ring flank (6) provided with the channels (7) is provided with an additional surface coating, preferably based on tin or sulphur.

4. Piston (1) comprising a piston ring (3) according to any one of the preceding claims, **characterised in that** it is mounted in an at least first annular groove (2) of the piston (1), which annular groove (2) has a groove height of 0.8 to 1.8 mm, a top land height of 2 to 10 mm, a ring land height of 2.5 to 7 mm and a flank roughness of Ra < 0.3 µm.

## Revendications

1. Segment de piston, en particulier segment de compression pour un piston pour moteurs à combustion interne, présentant sur le flanc de segment de piston des canaux répartis sur le pourtour, les canaux (7) étant ménagés dans le flanc de segment de piston (6) par procédé laser,
**caractérisé en ce**
**que** les canaux (7) présentent une profondeur t de 0,5 à 15 µm et une largeur b de 0,05 à 5 mm.

2. Segment de piston selon la revendication 1,
**caractérisé en ce**
**que** dans le flanc de segment de piston (6) sont ménagés 10 à 100 canaux (7) disposés à intervalles réguliers, s'étendant de préférence radialement.

3. Segment de piston selon l'une des revendications précédentes,
**caractérisé en ce**
**qu'**au moins le flanc de segment de piston (6) pourvu des canaux (7) est pourvu d'un revêtement de surface à base d'étain ou de soufre.

4. Piston (1) présentant un segment de piston (3) selon l'une des revendications précédentes,
**caractérisé en ce**
**que** celui-ci est logé dans au moins une première gorge (2) du piston (1), laquelle gorge (2) présente une hauteur de gorge de 0,8 à 1,8 mm, une hauteur de cordon de feu de 2 à 10 mm, une hauteur de cloison de gorge de 2,5 à 7 mm, ainsi qu'une rugosité de flanc de Ru < 0,3 µm.
